# EUROPEAN PATENT SPECIFICATION

(11) **EP 3 708 269 B1**
(45) Date of publication and mention of the grant of the patent: **07.06.2023**
(21) Application number: 20020111.9
(22) Date of filing: 09.03.2020
(51) Int. Cl.: B21H 3/04, G01B 11/00

(54) **AN INDEPENDENT DEVICE FOR PRESETTING FORMING ROLLERS FOR ROLLING MACHINES FOR EXTERNAL THREADS**
UNABHÄNGIGE VORRICHTUNG ZUR VOREINSTELLUNG VON FORMWALZEN FÜR WALZMASCHINEN FÜR EXTERNE GEWINDE
DISPOSITIF INDÉPENDANT POUR PRÉRÉGLER DES ROULEAUX DE FORMATION DE MACHINES DE LAMINAGE POUR FILETS EXTERNES

(30) Priority: 15.03.2019 IT 201900003803
(43) Date of publication of application: 16.09.2020
(73) Proprietor: Ort Italia Since 1964 S.r.l., 20122 Milano (IT)
(72) Inventor: Mizzotti, Franco, 26020 Genivolta (CR) (IT); Mizzotti, Andrea, 26020 Genivolta (CR) (IT); Mizzotti, Umberto Diego, 26020 Genivolta (CR) (IT)
(74) Representative: Lecce, Giovanni

(56) References cited:
- EP-A1- 3 112 044
- WO-A1-2018/067916
- DE-A1- 10 011 681
- JP-A- S55 128 340

## Description

The present invention refers to a device for adjusting tools to be used in machines for rolling processes.

More specifically, the present invention relates to an independent device for presetting forming rollers for rolling machines for making external threads on cylindrical bodies preferably of mechanical parts, such as shafts, bars, rods, etc., for various applications.

As is known in the industrial sector of precision machining, rolling machines for making external threads on cylindrical bodies work by cold plastic deformation of the material of the piece, obtained by forcing appropriate tools (forming rollers, specially shaped with threads) onto the cylindrical surface of the workpiece, obtaining the thread without cutting actions and without chip formation. Thanks to this cold deformation process, the resulting thread is more resistant to wear and fatigue since the external fibres of the material are compacted and not cut. See WO2018/067916 A1, which forms the basis for the preamble of claim 1, and DE 100 11 681 A1. Hereinafter the terms "forming roller" and "threading roller" will be considered synonyms.

EP 3112044 relates to a rolling machine suitable for forming a thread on cylindrical bodies; two or more forming rollers are arranged to plastically deform the body arranged along a central axis of the machine. JP S55 128340 refers to a solution for rolling the wire designed to set the position of the keyway of the support shaft and to accurately set the threading phase. In the rolling process, the deformation is obtained by means of forming rollers, mounted on tool-holder shafts, which act in compression against the workpiece and rotate around a fixed axis driven in rotation by a corresponding motor.

During machining, the cylindrical body, possibly supported by a special support, is cold deformed by the threads of the forming rollers, which, as said, rotate around a fixed axis. Each forming roller has an external thread with the thread opposite to that to be produced on the cylindrical body. By rotating around its own axis, which may be parallel, diverging or converging with respect to the rotation axis of the workpiece to be formed, each threading roller is forcibly moved by movement means in a radial direction, along an axis perpendicular to the axis of the cylindrical body. During machining, the thread of the forming roller comes into contact with the cylindrical surface of the workpiece and the subsequent tracing of the thread on the workpiece takes place. Several threading rollers (usually two or three) are used in the rolling machine. The impression imprinted on the cylindrical body undergoes an angular and axial displacement, such that the precise distance between the point of disengagement of the thread of the first forming roller and the point of engagement of the subsequent roller must be known, so that the latter copies exactly the impression of the previous.

To obtain the correct kinematics, the thread of the rollers must have the same inclination as that obtained on the cylindrical body and the rollers, conventionally two or three, must be offset by a specific angle corresponding to the different angular position of each with respect to the workpiece.

In common practice, once the correct positioning of the rollers has been defined, the phasing of the forming rollers takes place with manual operations and direct intervention of the operator on suitable adjustment devices provided on the machine and designed for such phasing procedure. This operation requires skill on the part of the operator and is not without possible omissions.

In addition, it requires a considerable expenditure of time and material for sampling, above all given the need to replace the rollers frequently, both for the type of processing and for maintenance. Rolling machines are also known of equipped with sensor means, of various type (mechanical or optical, e.g. camera or laser) electrically connected to a logic control unit and mechanically associated and movable, suitable to detect the axial coordinate of the thread of the threading roller with respect to an initial position. The sensor means detect the internal apex or valley of corresponding external apexes or crests of at least one thread of the first forming roller; following a rotation of the same, with consequent axial displacement of the thread, they intercept a first axial reference coordinate of the flank and transfer it to the logic control unit which determines an angular position. This operation, repeated for each forming roller, enables the logic control unit to identify the position of the thread of each roller in relation to an initial position. Once the position identification phase is completed, the rollers are rotated with respect to each other starting from the axial coordinates measured to obtaining the correct phasing.

Rolling machines equipped with such characteristics make up for any shortcomings in the operator's ability in the manual phasing of the rollers, as well as the consequent expenditure of time and material for sampling; moreover, the phasing process takes place on the machine and interferes with the work phases, delaying the production cycle.

The purpose of the present invention is to overcome the drawback complained of above.

More specifically, the purpose of the present invention is to provide an independent device for presetting forming rollers for rolling machines for making external threads on cylindrical bodies that determines the axial coordinate of the characteristic points of the thread of the forming roller with respect to a predetermined reference plane.

A further purpose of the present invention is to provide a presetting device of forming rollers independent of the machine, such that the latter, even if it is not equipped with thread measurement sensors, performs the necessary phasing of the rollers on the basis of the data collected by the independent presetting device.

A further purpose of this invention is to provide an independent presetting device that measures the angular position of the plane containing the characteristic points of at least one thread of the forming roller (starting position of the thread) with respect to an initial reference position.

A no less important purpose of the invention is to provide an independent device for presetting threading rollers connected to a calculator equipped with software, for the calculation of the angular position of the beginning of the thread, and with an interface, to provide the data in output to the numerical control of the rolling machine performing the phasing. These data can be printed, stored in computerized mode or stamped directly on the threading rollers in order to ensure repeatability of machine setting operations. These and other purposes are achieved by the independent device for presetting forming rollers for rolling machines for making external threads of the present invention, according to the main claim.

The construction and functional characteristics of the independent device for presetting forming rollers of the present invention will be more clearly comprehensible from the detailed description below in which reference is made to the appended drawings which show a preferred and non-limiting embodiment and wherein:
- figure 1 schematically represents an overall axonometric view of the independent device for presetting threading rollers according to the present invention;
- figure 2A schematically represents an axonometric view of a detail of the device shown in Figure 1 relative to the threading roller (for example, with a single-thread);
- figure 2B schematically represents a further axonometric view of the threading roller shown in Figure 2A;
- figure 3A represents an axonometric view of the threading rollers shown in Figures 2A and 2B during the machining step the thread by rolling, for example in the application of a machine with two threading rollers;
- figure 3B schematically represents the movement of the threading rollers during the machining step of the thread by rolling as in Figure 3A.

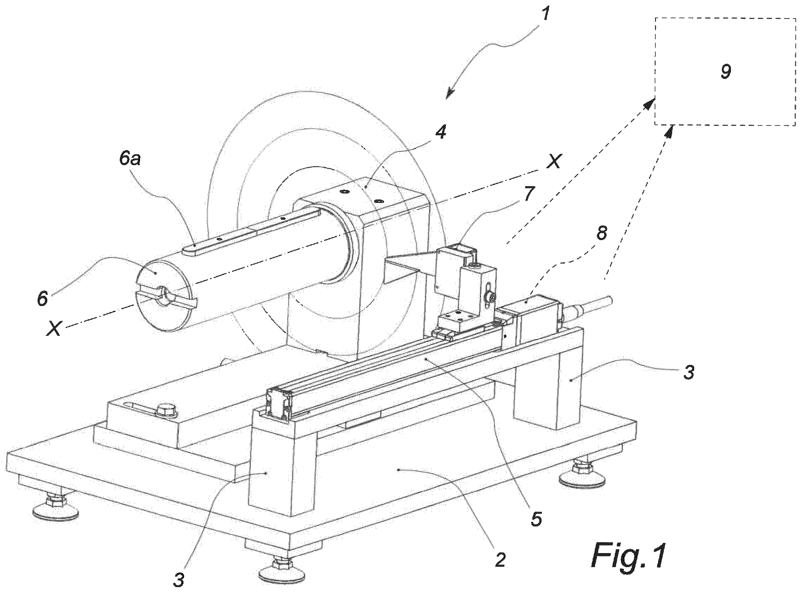

With reference to the aforesaid figures, the independent device for presetting forming rollers for rolling machines for making external threads on cylindrical bodies, preferably mechanical parts, such as shafts, bars, rods, etc., for various applications globally denoted by reference numeral 1 in Figure 1, comprises a support frame, consisting of a ground support plane 2 and vertical support elements 3 and 4, designed to respectively support a sliding guide 5, parallel to the support plane 2, and a tool-holder support or shaft 6, with longitudinal axis X parallel to the sliding guide 5.

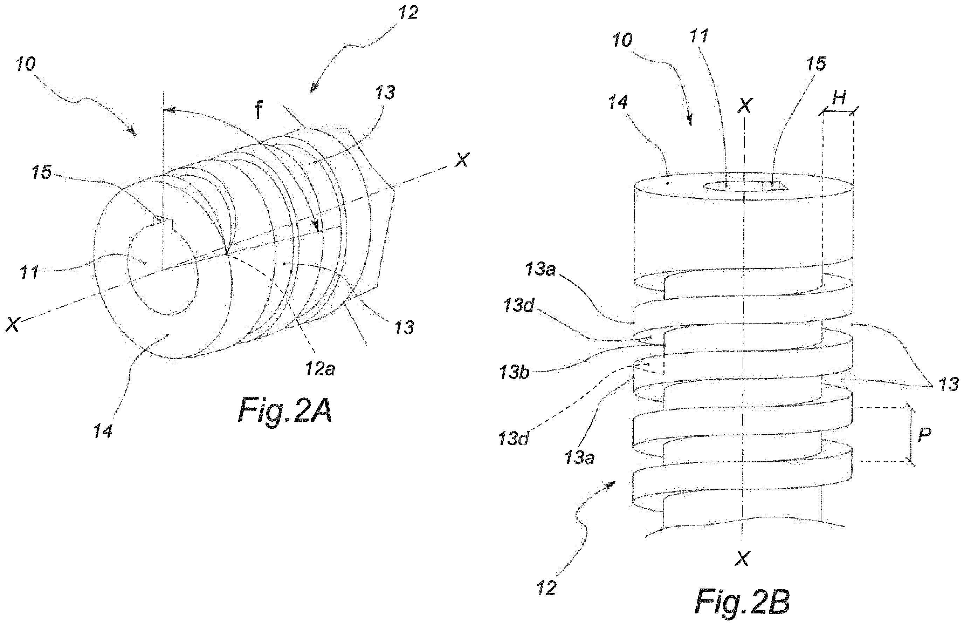

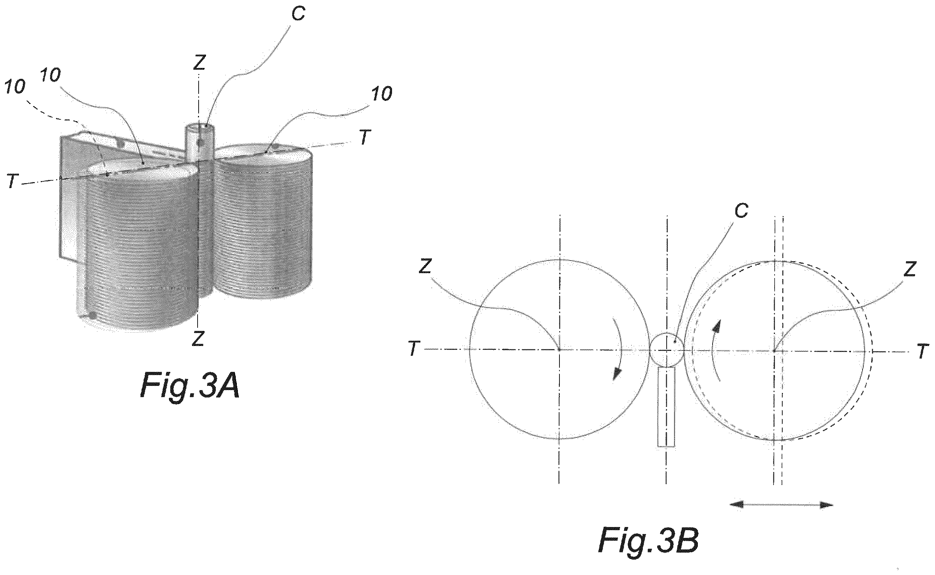

Said latter element defines the axial movement of a measuring instrument 7 of the laser type, movement determined by a motor 8 (not illustrated) associated therewith. The tool-holder shaft 6 is equipped with a longitudinally extending tab 6a on its external surface designed to fit into a coupling with a tool of the forming roller type 10. Said latter element, schematically represented in figures 2A and 2B, consists of a cylindrical body preferably made of steel, provided with a through hole 11 along the longitudinal axis X and provided with a thread 12, formed of one or more threads, where the term "thread" means a groove 13, continuous and with a helical pattern, made on the external surface of the forming roller 10. On the exposed face 14 of the threading type forming roller 10, a slot 15 is made, which extends over the entire internal surface of the threading roller 10, with axis parallel to the longitudinal axis X. Said slot 15 is predisposed to couple with said tab 6a, made on said tool-holder shaft 6, in the insertion step of the latter in the through-hole 11 of the threading roller 10. Said latter element, as represented by way of example and schematically in figure 2B, has a thread 12 along the external surface, consisting of a series of helical grooves 13 that define, along a generatrix, an alternating profile of external apexes or crests 13a and internal apexes or valleys 13b connected to each other by inclined flanks 13d. At said crests 13a the radius of the threading roller 10 is maximum and at said valleys 13b the radius of the threading roller 10 is minimum. The constant axial distance between two successive crests 13a defines the pitch P of the thread (in the case of a single thread; in the case of several threads this is the distance between two successive threads), while the constant radial distance between the crest 13a and the corresponding valley 13b defines the height H of the thread. The thread 12 has a series of characteristics that can vary according to the various applications and that determine its conformation, such as the helical pattern of the groove 13 and the relative screwing direction, the profile defined by the crest 13a and the corresponding valley 13b, the pitch P, the height H of the thread and the number of threads. The machining step, shown schematically in Figures 3A and 3B, requires the forming rollers 10 to cooperate with each other in succession. By turning each roller on its axis of rotation Z, corresponding to the axis of rotation of a cylindrical body or workpiece to be formed C, and moving along a transverse axis T in a radial direction with respect to the workpiece C, the rollers 10 impress, by compression of the external surface of the latter, an impression corresponding to the thread 12 made on them.

The exact angular position of the thread 12 of each roller 10 is measured by the independent presetting device 1 by inserting the tool-holder shaft 6 into the through hole 11 of the threading roller 10. Once the coupling between the slot 15 and tab 6a has taken place, the laser type 7 measuring instrument progressively advances along the longitudinal X axis of the forming roller 10, parallel to the axis of the sliding guide 5, scans it along a generatrix and measures the characteristics of the thread 12, determining the axial coordinate of the characteristic points with respect to a predetermined reference plane.

The data collected by the laser measuring instrument 7, processed by means of special software by the calculation unit 9, with which the independent device 1 is equipped, provide the value of the characteristic angle ϕ at the beginning of the thread with respect to the reference plane consisting of the position of the slot 15 made along the internal surface of the forming roller 10, coupled with the tab 6a of the tool-holder shaft 6.

This angle ϕ is characteristic of each forming roller 10 preset by the independent presetting device 1 and constitutes the information for the rolling machine to correctly phase the rollers 10 mounted on it for machining.

As may be seen from the above, the advantages which the invention achieves are evident.

The independent device for presetting forming rollers of external threads on cylindrical bodies allows the axial coordinate of the thread of the forming roller to be determined and the angular position thereof with respect to a predetermined reference plane to be measured; consequently enabling the reciprocal position of the threading rollers (phasing of the threading rollers) during the machining phase to be established before it starts.

Despite the invention having been described above with reference to one of its possible embodiments, given solely by way of a non-limiting example, numerous modifications and variants will appear evident to a person skilled in the art in the light of the above description. The present invention therefore sets out to embrace all the modifications and variants which fall within the scope of the following claims.

## Claims

1. A presetting device (1) of forming rollers for rolling machines for making external threads on cylindrical bodies or pieces to be formed (C) of mechanical parts, such as shafts, bars, rods, etc., for various applications, said presetting device being external, independent and autonomous with respect to a rolling machine, **characterised in that** it comprises a support frame, consisting of a ground support plane (2) and vertical support elements (3, 4), respectively supporting a sliding guide (5) of a measuring instrument of the laser type (7) and a tool -holder support or shaft (6), predisposed to fit into a coupling with a threading roller (10) at a through hole (11) made on the exposed face (14) thereof; further **characterised in that** the laser (7), when in use being moved along the sliding guide (5), measures the angular position ( ϕ) of the beginning of the thread by determining the characteristic points of a thread (12) arranged axially along a roller generatrix (10) with respect to a predetermined reference plane depending on the coupling of the tab (6a) of the tool-holder shaft (6) with a slot (15) of the threading roller (10), the sliding guide (5), parallel to the ground support plane (2), axially defines the movement, powered by a motor means (8), of the laser (7) and **in that** the tool-holder shaft (6), with longitudinal axis (X) parallel to the sliding guide (5), is provided along the external surface with a longitudinally extending tab (6a), predisposed to couple with a slot (15) that extends throughout the entire internal surface of the threading roller (10), said presetting device having a calculation unit (9), equipped with dedicated software, for processing the data detected by the laser (7) and determining the angular position (ϕ)of the beginning of the thread of the forming roller (10) with respect to the predetermined reference plane.

2. The independent device for presetting (1) forming rollers according to claim 1, **characterized in that** said detection of the angular position (ϕ) of the beginning of the thread and said determination of the characteristic points of the thread (12) take place before the machining step of the rolling machine, which receives the data detected in order to correctly phase the forming rollers (10) thereon.

## Patentansprüche

1. Eine Voreinstellvorrichtung (1) von Formrollen für Walzmaschinen zum Herstellen von Außengewinden an zylindrischen Körpern oder Stücken (C), die geformt werden aus mechanischen Teilen, wie Schäften, Stangen, Stäben, etc., für verschiedene Anwendungen, wobei die Voreinstellvorrichtung extern, unabhängig und autonom in Bezug auf eine Walzmaschine ist, **dadurch gekennzeichnet, dass** sie einen Stützrahmen umfasst, bestehend aus einer Bodenstützfläche (2) und vertikalen Stützelementen (3, 4), die jeweils eine Gleitführung (5) eines Messgeräts des Lasertyps (7) und eine Werkzeughaltestütze oder einen Werkzeughalteschaft (6) stützen, der dazu ausgebildet ist, in eine Kopplung mit einer Gewinderolle (10) an einem Durchgangsloch (11), das an deren freiliegender Fläche (14) gebildet ist, zu passen; und ferner **dadurch gekennzeichnet, dass** der Laser (7), wenn er im Einsatz entlang der Gleitführung (5) bewegt wird, die Winkellage (ϕ) des Beginns des Gewindes misst durch Bestimmen der charakteristischen Punkte des Gewindes (12), das axial entlang einer Rollermantellinie (10) mit Bezug auf eine vorbestimmte Bezugsebene angeordnet ist, die abhängig ist von der Kopplung der Lasche (6a) des Werkzeughalteschafts (6) mit einem Schlitz (15) der Gewinderolle (10), wobei die Gleitführung (5), die parallel zu der Bodenstützfläche (2) ist, axial die Bewegung des Lasers (7), die durch ein Motormittel (8) angetrieben wird, definiert, und dadurch, dass der Werkzeughalteschaft (6), dessen Längsachse (X) parallel zu der Gleitführung (5) ist, entlang der äußeren Oberfläche mit einer sich längs erstreckenden Lasche (6a) vorgesehen ist, die dazu ausgebildet ist, sich mit einem Schlitz (15) zu koppeln, der sich über die gesamte Innenfläche der Gewinderolle (10) erstreckt, wobei die Voreinstellvorrichtung eine Berechnungseinheit (9) aufweist, die mit einer speziellen Software ausgestattet ist, um die vom Laser (7) erfassten Daten zu verarbeiten und die Winkellage (ϕ) des Beginns des Gewindes der Formrolle (10) in Bezug auf eine vorbestimmte Bezugsebene zu bestimmen.

2. Die unabhängige Voreinstellvorrichtung (1) von Formrollen nach Anspruch 1, **dadurch gekennzeichnet, dass** das Erfassen der Winkellage (ϕ) des Beginns des Gewindes und das Bestimmen von charakteristischen Punkte des Gewindes (12) vor dem Bearbeitungsschritt der Walzmaschine erfolgen, die die erfassten Daten empfängt, um die Formrollen (10) korrekt darauf abzustimmen.

## Revendications

1. Dispositif (1) de préréglage de rouleaux de formage pour des laminoirs pour fabriquer des filets extérieurs sur des corps ou des pièces cylindriques devant être formés (C) de parties mécaniques, telles que des arbres, des barres, des tiges, etc., pour diverses applications, ledit dispositif de préréglage étant externe, indépendant et autonome par rapport à un laminoir, **caractérisé en ce qu'**il comprend un cadre de support, constitué d'un plan de support au sol (2) et d'éléments de support verticaux (3, 4), supportant respectivement un guide de coulissement (5) d'un instrument de mesure de type laser (7) et un support ou un arbre porte-outil (6), prédisposé pour s'ajuster dans un accouplement avec un rouleau (10) de filetage au niveau d'un trou débouchant (11) réalisé sur la face exposée (14) de celui-ci ; **caractérisé en outre en ce que** le laser (7), qui est déplacé lorsqu'il est en utilisation le long du guide de coulissement (5), mesure la position angulaire (ϕ) du début du filet en déterminant les points caractéristiques d'un filet (12) agencé axialement le long d'une génératrice à rouleau (10) par rapport à un plan de référence prédéterminé en fonction de l'accouplement de la patte (6a) de l'arbre porte-outil (6) avec une fente (15) du rouleau (10) de filetage, le guide de coulissement (5), parallèle au plan de support au sol (2), définit axialement le déplacement, alimenté par un moyen moteur (8), du laser (7) et **en ce que** l'arbre porte-outil (6), avec un axe longitudinal (X) parallèle au guide de coulissement (5), est doté le long de la surface externe d'une patte (6a) s'étendant longitudinalement, prédisposée pour s'accoupler avec une fente (15) qui s'étend sur la surface interne entière du rouleau (10) de filetage, ledit dispositif de préréglage ayant une unité de calcul (9), équipée d'un logiciel dédié, pour traiter les données détectées par le laser (7) et déterminer la position angulaire (ϕ) du début du filet du rouleau (10) de formage par rapport au plan de référence prédéterminé.

2. Dispositif (1) indépendant pour prérégler des rouleaux de formage selon la revendication 1, **caractérisé en ce que** ladite détection de la position angulaire (ϕ) du début du filet et ladite détermination des points caractéristiques du filet (12) ont lieu avant l'étape d'usinage du laminoir, qui reçoit les données détectées afin de phaser correctement les rouleaux (10) de formage sur celui-ci.
